Europäisches Patentamt

European Patent Office

Office européen des brevets

(11) Publication number: **0 328 396**
**A1**

## (12) EUROPEAN PATENT APPLICATION

(21) Application number: **89301272.4**

(22) Date of filing: **10.02.89**

(51) Int. Cl.⁴: **G 01 C 25/00**
**G 01 C 19/22**

(30) Priority: **11.02.88 GB 8803163**

(43) Date of publication of application:
**16.08.89 Bulletin 89/33**

(84) Designated Contracting States:
**DE ES FR GB IT SE**

(71) Applicant: **BRITISH AEROSPACE PUBLIC LIMITED COMPANY**
**11 Strand**
**London WC2N 5JT (GB)**

(72) Inventor: **Alderton, Paul Michael**
**c/o British Aerospace PLC Six Hills Way**
**Stevenage Herts, SG1 2DA (GB)**

(74) Representative: **Newell, William Joseph et al**
**Wynne-Jones, Lainé & James 22 Rodney Road**
**Cheltenham Gloucestershire GL50 1JJ (GB)**

(54) Flexure mounting assembly.

(57) A flexure mounting assembly, e.g. for a gyroscope is made by providing a blank element 10, inserting flexure elements 28 in orthogonally directed pairs of diametrically opposed bores 25, and then separating said blank element, e.g. by an electro-discharge machining process into a shaft portion 12, a gimbal portion 38 and a rotor attachment plate 36.

Fig.7.

EP 0 328 396 A1

**Description**

## FLEXURE MOUNTING ASSEMBLY

This invention relates to a mounting assembly for allowing relative flexure movement of two members about two axes and to gyroscopes incorporating such assemblies.

Such assemblies are used, for example, in dynamically tuned gyroscopes. In a dynamically tuned gyroscope, the rotor is mounted on a shaft by a universal joint known as a Hookes Joint. This joint allows limited angular movement about axes perpendicular to the spin axis of the gyroscope. In order to allow this freedom there is an intermediate member between the shaft and the rotor. This intermediate member is the gimbal which is usually, but not always, connected to the shaft and to the rotor by crossed leaf flexure joints. In use the tilting of the rotor caused by movement of the gyroscope is sensed and counteracted by applying electromagnetically a restoring couple, so that the rotor remains in substantially the same orientation with respect to the shaft. The magnitude of the restoring couple or couples necessary to maintain the orientation of the rotor is proportional to the rate of turn of the gyroscope abouts its sensing axis or axes. It is important that the flexure assemblies in a gyroscope are properly aligned and that they provide minimal resistance to tilting of the rotor.

In our earlier U.K. Patent No. 1,444,123, we disclose a flexure joint assembly for allowing movement about a single tilt axis and which is made by securing leaf springs in a unitary member and then dividing the unitary member along a plane containing the tilt axis of the flexure assembly. This joint assembly is useful in that it overcomes the problems of alignment of the two parts of the joint during manufacture.

In applying the assembly to the connection between the shaft and the rotor of a gyroscope, two flexure joint assemblies are positioned diametrically opposite each other between the shaft and a gimbal with the tilt axes of the assemblies aligned. Similarly, two flexure joint assemblies are positioned diametrically opposite each other between the rotor and the gimbal. The latter two flexure joint assemblies are disposed orthogonally to those between the shaft and the gimbal.

In assembly of the gyroscope it is necessary accurately to locate the flexure joint assemblies both with respect to the other assembly of the pair and with respect to the other pair of assemblies, and also to secure each half of each assembly to the associated part of the rotor, gimbal or shaft. This locating and securing is time consuming and can lead to errors in alignment. Also the number of parts is large in the finished assembly (11 items including the rotor and shaft, but excluding the leaf springs).

We have found that it is possible to provide an arrangement in which the alignment of the various parts can be improved, and the number of parts reduced and the assembly time can be reduced.

According to one aspect of this invention, there is provided a flexure mounting assembly for allowing relative flexure movement of two members about two axes, comprising a first member, an intermediate member, a flexure means mounting said intermediate member on said first member for tilting movement about a first axis, a second member and flexure means mounting said second member on said intermediate member for tilting movement about a second axis, said assembly having been made by forming a unitary member, connecting said flexure means thereto and finally separating said unitary member into spaced parts to form said first member, said intermediate member and said second member.

Further aspects will become apparent from the following description of a non-limiting example of this invention, reference being made to the accompanying drawings which illustrate, in sequence, the steps in the manufacture of a suspension for a dynamically tuned gyroscope according to an example of this invention and in which:

Figures 1a to 1e show the one-piece blank that after the various manufacturing processes becomes effectively the shaft, the gimbal and the rotor attachment plate of the suspension in side view; on arrows b-b of Figure 1a, in top plan view, and on section lines d-d and e-e of Figure 1a respectively;

Figures 2a to 2c are views on an enlarged scale, similar to Figures 1a to 1c but showing the blank following formation therein of four pairs of slots for receiving the flexure leaves;

Figure 3 is a plan view of a flexure leaf;

Figures 4a and 4b are views similar to Figures 2a and 2b but showing the blank following installation of the flexure leaves;

Figures 5a and 5b are views similar to Figures 4a and 4b but showing the blank following separation by machining into the shaft, the gimbal and the rotor attachment plate;

Figures 6a and 6b are an end view and a longitudinal section respectively of the arrangement of Figures 5a and 5b with a rotor assembly attached to the rotor attachment plate;

Figure 7 is a cut-away perspective view illustrating the suspension of Figures 6a and 6b, and

Figure 8 is a perspective view of a typical profile for a machining electrode.

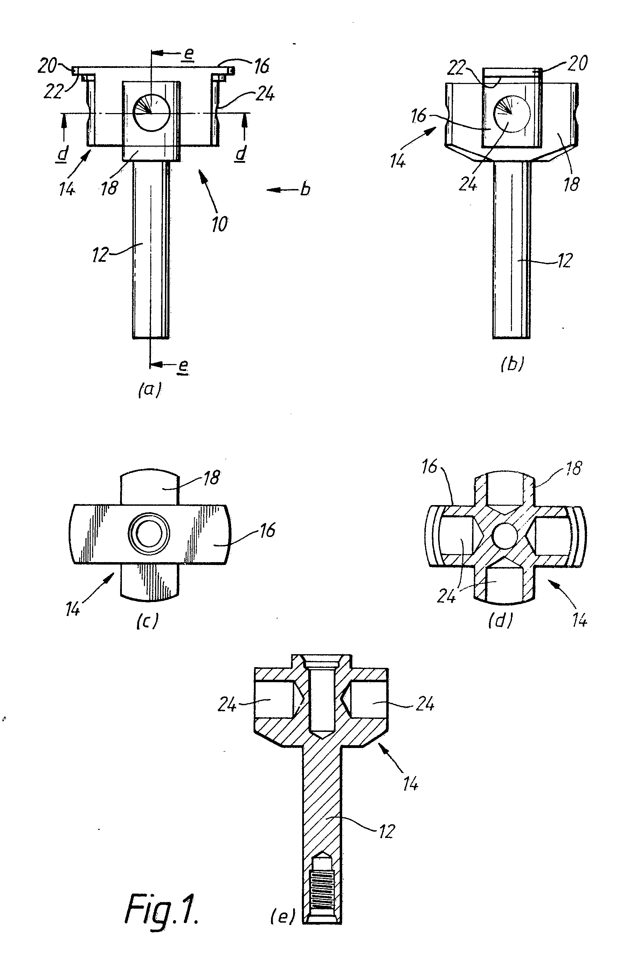

The Figures illustrate the steps in the manufacture of a suspension for a dynamically tuned gyroscope. Figures 1a to 1e show a blank 10 which comprises a shaft portion 12 and a generally cruciform head portion 14 comprising limbs 16 and 18. The limb 16 includes at its ends a lip 20 and abutment surface 22 for locating the rotor assembly as to be described below. The limb 18 merges with the shaft portion 12. As can be seen clearly in Figure 1(d), four blind bores 24 are provided on in each end of each limb 16 and 18 respectively.

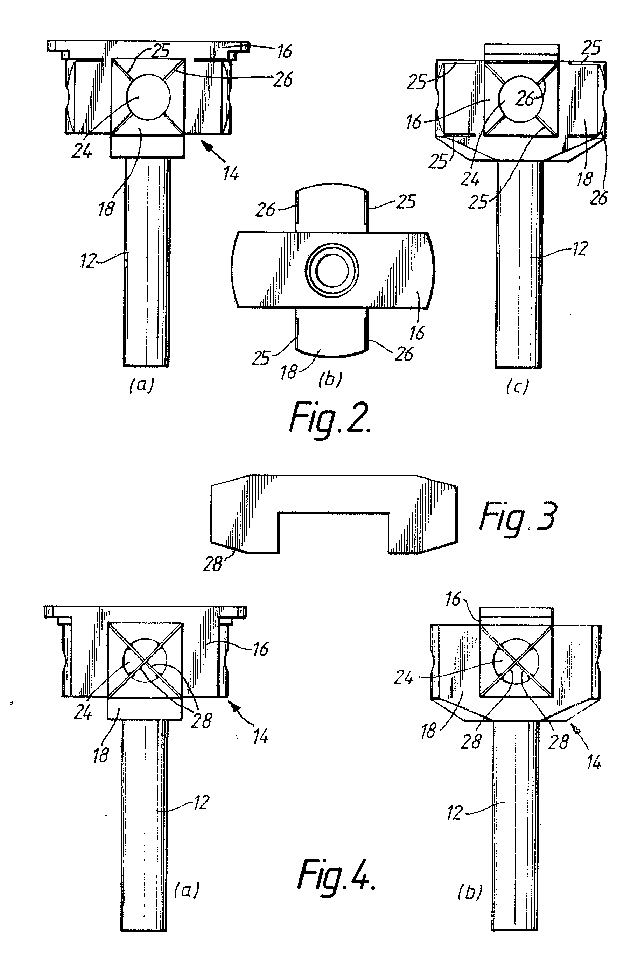

Figures 2a to 2c show four pairs of slots 25, 26 cut one pair in each end of each limb 16 and 18. The slots 25, 26 intersect at right angles at the axis of the associated bore 24. The width of the slots 25 and 26 is such that they will accommodate the flexure leaves 28 of the type shown in Figure 3. The flexure leaves 28 are produced by a very fine grinding wheel or by electro-discharge machining using a fine wire. The thickness of the leaf 28 may typically be about 0.07mm.

The flexure leaves 28 are brazed into the slots 25, 26 in a vacuum furnace to form the arrangement shown in Figures 4a and 4b. Naturally, the flexure leaves 28 are located in the slots 25, 26 such that the cut outs 30 face in opposite directions so that the leaves can cross at 90° without contacting each other.

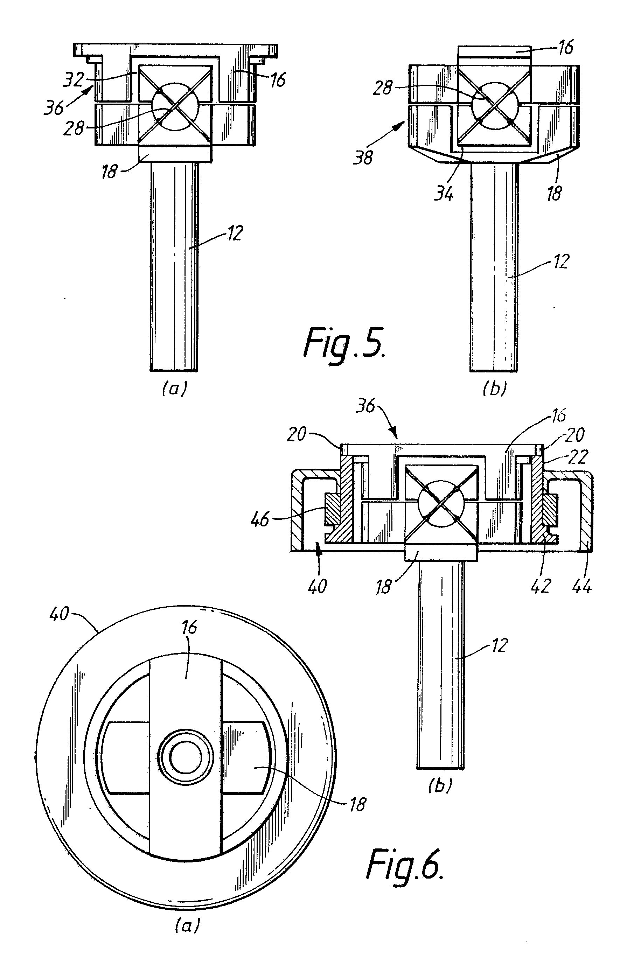

Having brazed the flexure leaves 28 in position, the blank 10 may now be separated into its separate parts. Two cuts 32, 34 of hat-shaped section are made. One cut 32 - seen in end view in Figure 5(a) -serves to separate a part which forms the rotor attachment plate 36. The other cut 34 - seen in end view in Figure 5(b) - serves to separate the gimbal 38 from the shaft portion 12. Each cut is similar in dimensions; the vertically extending portions and the bridging portions of each hat-shaped cut may typically be 0.5 mm wide and the remaining lateral portions may typically be 0.2 mm wide. These dimensions provide the range of movements required for the present arrangement and may be varied as necessary for other arrangements.

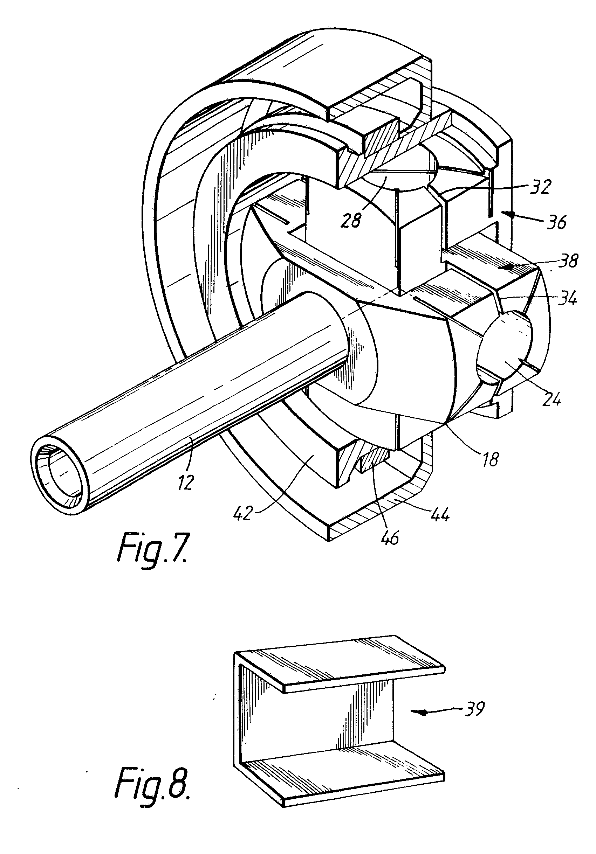

The 0.5 mm slots are cut into the blank by an electro-discharge sinking machine using a specially shaped electrode 39 as shown in Figure 8. In the process, the electrode 39, sinks into the work piece as metal is eroded away. The electrode 39 is specially shaped from a copper alloy material or graphite. Dimensional accuracy is maintained by pulsing the discharge current during the machining process. The electrolyte used is white spirit. The cutting cycle is approximately 30 minutes per slot. The overall batch time may be reduced by the machining several suspensions at the same time on one machine. The suspension is then completed by the cutting of the 0.2 mm wide slots, again by electro discharge machining. It is important that the final operation is a stress free process so as not to damage the suspension.

Once manufacture of the suspension is complete, the rotor assembly 40 may be attached to the rotor attachment plate 36. The rotor assembly 40 comprises an inner collar 42 which locates against the lip 20 and the abutment surface 22 and which is secured to the rotor attachment plate 36 by electron beam welding. The rotor assembly 40 further comprises a rotor portion 44 and a torquing coil 46. In the above arrangement, the slots 32 and 34 are shown as being of square hat-shaped form. However the slots may take other forms, for example of generally smoothly curved U-shape.

Compared to previous arrangements the alignment and assembly of the illustrated suspension are greatly simplified leading to a possibility of greater accuracy in alignment. Furthermore, the component parts of the illustrated arrangement is greatly reduced compared to the arrangement disclosed in our earlier U.K. Patent; taking the rotor assembly as one piece and excluding the flexure leaves the illustrated arrangement has but four separate parts (compared to 11)

Also, the design of the illustrated embodiment is such that the suspension blank 10 is easily manufactured on an automatic machining centre which produces not only the gimbal but also the rotor attachment plate and completed shaft of the assembly. The fact that the shaft is produced as an integral part of the assembly enables good alignment of the slots that house the flexure leaves which are then brazed in position before final separation of the unit.

A particular advantage of the illustrated embodiment is that the central region of the gimbal is accessible so that it is possible to trim the gimbal inertias to compensate for variation in the flexural torsional stiffness.

## Claims

1. A flexure mounting assembly for allowing relative flexure movement of two members about two axes, comprising a first member, an intermediate member, a flexure means mounting said intermediate member on said first member for tilting movement about a first axis, a second member and flexure means mounting said second member on said intermediate member for tilting movement about a second axis, said assembly having been made by forming a unitary member, connecting said flexure means thereto and finally separating said unitary member into spaced parts to form said first member, said intermediate member and said second member.

2. A flexure mounting assembly according to Claim 1, wherein each of said flexure means comprises two flexure joint assemblies spaced apart along the associated tilt axis, each assembly comprising crossed leaf springs interconnecting said intermediate member and one of said first or second member, the springs being arranged to pass edgeways through the associated tilt axis and being spaced from each other along the tilt axis.

3. A flexure mounting assembly according to Claim 1 or Claim 2 wherein said first and second axes intersect at right angles.

4. A flexure mounting assembly according to any of the preceding claims wherein said first member includes a shaft portion, said intermediate member defines a gimbal member and said second member is attached to or forms at least a part of a rotor assembly of a gyroscope.

5. A gyroscope including a flexure mounting assembly as claimed in Claim 1.

6. A flexure mounting assembly for allowing flexure movement about two generally orthogonal pivot axes, comprising a shaft portion, a gimbal portion mounted on said shaft portion for tilting movement about one of said pivot axes, and an attachment plate portion mounted on said gimbal portion for tilting movement about another of said pivot axes, said assembly having been made by forming a unitary blank member including a shaft portion and a head portion, said head portion including two orthogonally disposed diametrically opposed pairs of location bore means aligned one with each pivot axis respectively, securing in each of said location bore means flexure means and thereafter machining said blank along two orthogonally directed machining sections of predetermined shape to form said shaft portion, said gimbal portion and said attachment plate portion and to release said portions for relative tilting movement about said pivot axes.

7. A flexure mounting assembly according to Claim 7, wherein said blank is machined using an electro-discharge process.

8. A flexure mounting assembly according to Claim 7, wherein said attachment plate includes an aperture therein allowing access to the region of said gimbal portion which surrounds the longitudinal axis of the shaft portion, whereby the gimbal inertias may be adjusted.

9. A flexure mounting assembly according to claim 7, wherein each of said flexure means comprises a pair of crossed flexure leaves.

10. A flexure mounting assembly according to claim 7, wherein each of said machining sections intersects each of the location bore means of an associated one of said pairs thereof.

11. A flexure mounting assembly according to claim 7 wherein said attachment plate supports a rotor element generally concentric with said shaft portion.

*Fig.1.*

EP 0 328 396 A1

**Fig.2.**

(a)

(b)

(c)

**Fig.3**

**Fig.4.**

(a)

(b)

Fig.5.

(a)

(b)

Fig.6.

(a)

(b)

Fig.7.

Fig.8.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | GB-A-1 444 123 (BRITISH AIRCRAFT) <br> * Figure; claim 1 * <br> --- | 1 | G 01 C 25/00 <br> G 01 C 19/22 |
| A | GB-A-1 058 780 (AMERICAN BOSCH ARMA CORP.) <br> * Figures 1-3; claims 1,9 * <br> --- | 1 | |
| A | FR-A-2 198 579 (BENDIX) <br> * Figures 1-3; claim 1 * <br> ----- | 1 | |

TECHNICAL FIELDS
SEARCHED (Int. Cl.4)

G 01 C
F 16 C
B 23 P

The present search report has been drawn up for all claims

| Place of search | Date of completion of the search | Examiner |
|---|---|---|
| THE HAGUE | 18-05-1989 | KOLBE W.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)